# EUROPEAN PATENT SPECIFICATION

(11) **EP 0 632 546 B1**
(45) Date of publication and mention of the grant of the patent: **05.03.2003**
(21) Application number: 94108377.6
(22) Date of filing: 31.05.1994
(51) Int. Cl.: H01R 31/08, H01R 13/703

(54) **Connector shorting spring**
Kurzschlussfeder für Stecker
Ressort de court-circuit pour fiche

(30) Priority: 01.06.1993 US 69793
(43) Date of publication of application: 04.01.1995
(73) Proprietor: ITT MANUFACTURING ENTERPRISES, INC., Wilmington, Delaware 19801 (US)
(72) Inventor: Muzslay, StevenZoltan, Huntington Beach California 92646 (US)
(74) Representative: Esser, Wolfgang

(56) References cited:
- US-A- 3 597 722
- US-A- 3 668 606
- US-A- 4 170 939
- US-A- 4 628 818
- US-A- 4 971 568

## Description

An automobile air bag can be deployed by an initiator that is constantly connected to a voltage source, but with the initiator terminals constantly shorted by a sensor. When the sensor detects a collision, its shorting switch opens and allows current to pass through the initiator to deploy the air bag. During vehicle maintenance, a repairman may wish to disconnect the collision sensor from the initiator. In the past, disconnection would lead to firing of the initiator and deployment of the air bag. Accordingly, many prior air bag systems have been constructed to prevent repairmen from disconnecting the connector from the initiator, which hampers repairmen.

The connector can be made disconnectable from the initiator, by providing a shorting device that automatically shorts the terminals of the initiator when the connector is disconnected from the initiator. Such automatic shorting devices are known, with U.S. Patent 4,971,568 by Cronin showing one example, wherein a leaf spring pivots up and against a terminal to ground it, until a mating connector pushes down the leaf spring.
*US Patent 4,628,818 showing another example, having a leaf spring with a bent back leaf spring portion which pivots downwardly to interrupt the contact between the terminals when mated with the corresponding connector.*

However, in a critical application such as an air bag system, any shorting device must have great reliability, especially in assuring that it does not inadvertently short the terminals when the sensor connector has been connected to the initiator. Such inadvertent shorting would result in the air bag not deploying in the event of a crash. A shorting device which was of high reliability, especially in assuring that a pair of terminals are not shorted when two connectors mate, would be of considerable value.

### SUMMARY OF THE INVENTION

In accordance with one embodiment of the present invention, a connector system and connector is provided which includes a shorting spring device that shorts a pair of connector terminals, and that is reliably moved to a position where it does not short the terminals when the connector mates with another connector. The spring device has an anchor end permanently connected to the first terminal, and has a contacting end portion which pivots In shorting and unshorting directions against and away from the second terminal.

In a preferred embodiment of the invention, to prevent accidental shorting when the connectors are mated and the contact end portion has been moved inwardly to Its unshorting position, an isolator of dielectric material is provided that surrounds an Inner portion of the second terminal, with the contacting end portion lying around the isolator.

The spring device can be formed of a piece of sheet metal with its anchor end having a hole receiving the first terminal, and with the sheet metal forming a tab extending inwardly Into a slot in the base. The tab in connection with the slot limits a possible rotation of the spring device about the first terminal and therefore supports the prevention against accidental shorting when the connectors are mated.

The contacting end portion of the spring device can include a large aperture through which the second terminal projects. The aperture results in the contact end portion having a pair of arms on laterally opposite sides of the second terminal. The arms are connected by a laterally extending leg that forms a contact location that will engage the second terminal.

The anchor end of the spring device can be rigidly fixed to the first terminal by forming slots that leave a pair of abutments, and with one of the abutments initially extending at an incline but being pressed down to penetrate into the surface of the first terminal.

The novel and inventive features of the invention are set forth with particularity in the appended claims, which will be explained and supported in more detail and best understood from the following description when read in conjunction with the accompanying drawings:
- Fig. 1: is an isometric view of a connector and connector device of the present invention.
- Fig. 2: is a plan view of the connector of Fig. 1, but without the spring device in place.
- Fig. 3: is a sectional view of the connector system of Fig. 1, with the connector and connector device in a partially mated configuration.
- Fig. 4: is a schematic view of the circuitry of an air bag system which includes the connector assembly of Fig. 1.
- Fig. 5: is an isometric view of a portion of the connector of Fig. 3.
- Fig. 6: is a plan view of the spring device of the connector Fig. 5, shown prior to bending of the tab thereof, and showing, in phantom lines, the position of the base.
- Fig. 7: is an enlarged sectional view of the first terminal of the connector of Fig. 5, showing the manner in which the anchor end of the spring device is installed.
- Fig. 8: is an enlarged view of a portion of Fig. 3.
- Fig. 9: is an isometric view of a connector constructed in accordance with another embodiment of the invention.

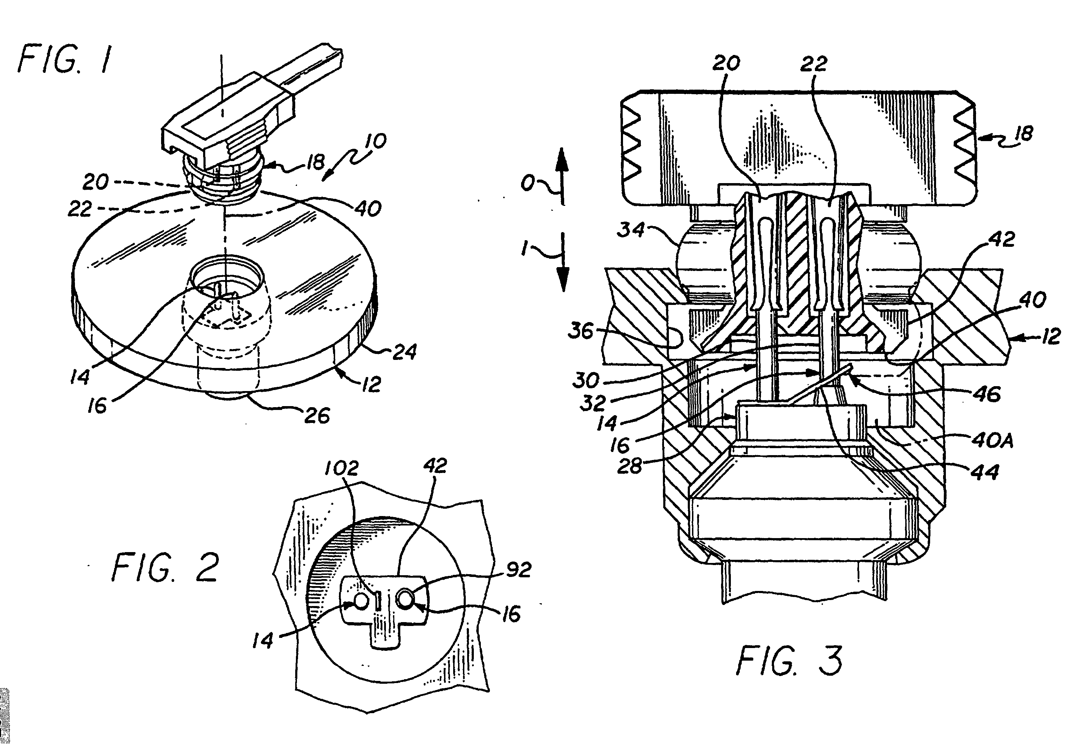

Fig. 1 illustrates a connector assembly 10 which includes a receptacle connector 12 having a pair of terminals 14, 16, which mates with a plug connector, or connector device 18 that has a pair of corresponding terminal devices 20, 22. The particular connector includes a metal plate 24 that holds an initiator 26 that is used to inflate an air bag in an automobile. The connector device 18 connects to circuitry that fires the initiator, such as a sensor that senses a collision.

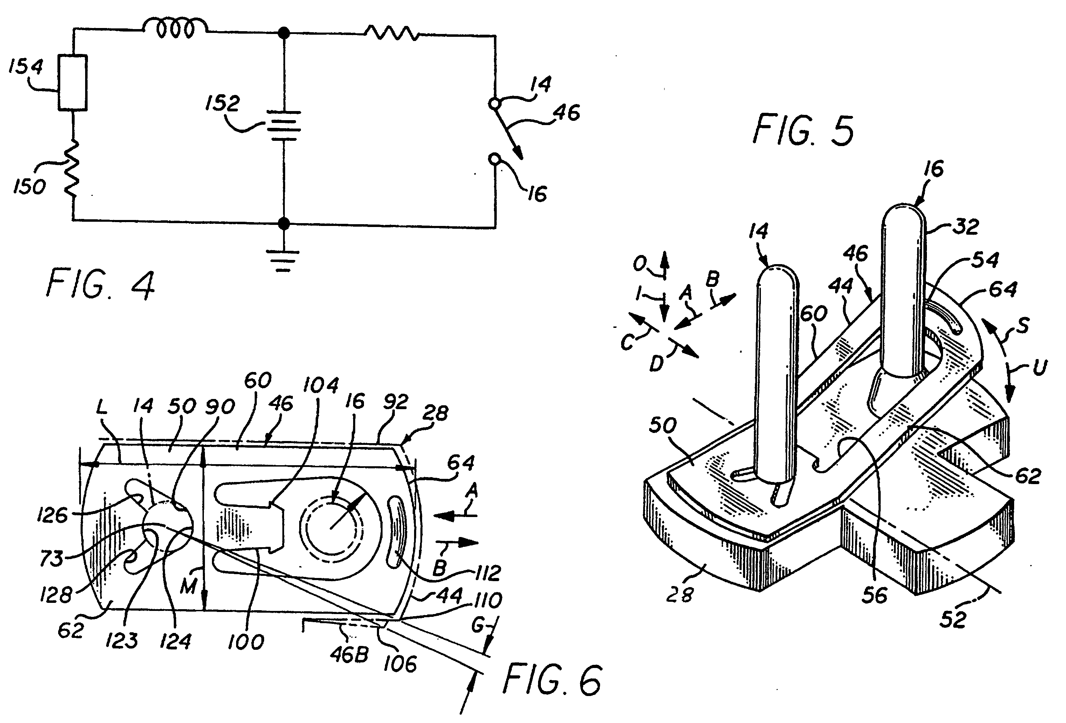

Fig. 3 shows the plug and receptacle connectors 12, 18 after they have partially mated. The terminals 14, 16 have mounted ends fixed in an insulative housing or base 28 of the connector. The terminals have free ends 30, 32 whose outer tips touch the terminal devices 20, 22 of the connector device at the beginning of mating as shown in Fig. 3. When the connector 18 is pushed down, a snap ring 34 on the connector device will snap into a groove 36 of the receptacle connector. The lower end 40 of an insulative housing 42 of the connector device will then move down to the position 40A. In moving down, the insulative housing will depress a contacting end portion 44 of a spring device 46. Such depression of the contacting end portion in an inward direction I will move the spring device out of engagement with the second terminal 16.

As shown in Fig. 5, the spring device 46 has an anchor end 50 which is anchored in place and connected to the first terminal 14. The contacting end portion 44 pivots largely about a pivot axis 52 so the end portion can move in a shorting direction S and an opposite unshorting direction U. When the contacting end portion 44 is not pushed inwardly in direction I, it pivots in the shorting direction S until a contact location 54 on the contacting end portion engages, or contacts, the outer end portion 32 of the second terminal 16. The spring device 46 is formed of sheet metal, and the contacting end portion 44 forms a large aperture 56, with the second terminal 16 projecting through the aperture. The aperture results In the contacting end portion having a pair of opposite arms 60, 62 that extend largely in longitudinal directions A, B along which the terminals 14, 16 are spaced. The arms are laterally spaced in lateral directions C, D, with arm ends opposite the anchor end being connected together by a laterally extending leg 64. The contact location 54 which engages the second terminal, lies on the leg 64.

Fig. 8 shows the plug connector device 18 as it begins to mate with the receptacle connector 12. The connector device will move in the inward direction I by a distance E before it becomes fully mated. During such inward movement, an inwardly-facing wall 70 on the connector device will engage the leg 64 of the spring device and push it inwardly. The leg 64 of the contacting end portion will pivot in the unshorting direction U until it reaches the fully unshorted position shown at 64A where it lies adjacent to the outer surface 66 of the base 28. During such unshorting movement, the contact location 54 not only moves inwardly, but also sidewardly in the lateral direction B so it moves away from the axis 72 and cylindrical outer surface of the second terminal 16, by a distance F. Conversely, when the connector device unmates, the spring bias of the spring device causes the contacting end portion 44 and leg 64 to pivot in the shorting direction S, wherein the contact location 54 not only moves outwardly in direction O, but also longitudinally in the direction A until it engages the second terminal. It is noted that the plug housing 42 of the connector device has a recess or keyway 80 which receives an outer part or key 82 of the insulative base 28.

As shown in Fig. 6, the anchor end or end portion 50 of the spring device 46 has a hole 90 that closely receives the first terminal 14. The walls of the hole 90 make an electrical connection between the first terminal and the spring device, and also help position the spring device. However, it is still possible for the spring device to pivot about the axis 73 of the first terminal. Unless precautions were taken, it might be possible for the spring device to pivot far enough that one of the arms 60, 62 could touch the cylindrical outer surface of the second terminal 16, even when the contacting end portion had been pivoted to its fully unshorted position. As discussed above, such a touching, which results In shorting the two terminals, could be disastrous, In that such shorting would probably not be apparent until it caused failure of the air bag to deploy in a collision. Applicant takes several steps to prevent such accidental touching, which may be used in combination or independently.

In accordance with the present invention, applicant provides an isolator 92, shown in Fig. 8, which surrounds an inner part 94 of the second terminal free end portion 32. Applicant considers the terminal free end portion 32 to be the part that extends outwardly from a location 96 where the contacting end portion at leg 64A lies in its fully unshorted position. Each terminal also has an anchored part 98 lying in the base. The base 28 is wide inward of the location 96, so the contact end portion cannot pivot any further In the unshorting direction inward of the location 96. The isolator 92, which is formed of dielectric material, provides a barrier against contact of terminal 16 with either of the arms 60, 62, if the spring device should pivot about the axis 73. The isolator 92 is preferably molded as part of the base 28, although it can be a separate element.

The isolator 92 has a small radial thickness T, to avoid interfering with pivoting of the contact end portion in the unshorting direction. The thickness T is preferably less than the width W of the terminal free outer end portion, and is desirably less than one-half W. Applicant prefers to taper the isolator so it is of progressively greater thickness at more inward locations. As a result, if the spring device pivots about axis 73 to a position where there Is interference with the isolator, then as the contacting end portion pivots in the unshorting direction, the isolator will tend to realign the spring device. The isolator will realign the spring device so it is closer to the desired position wherein the Inner surfaces of the arms which form the walls of the aperture 60, are equally spaced from the second terminal.

Another way in which applicant avoids unwanted pivoting of the spring device about axis 73, is to provide a tab 100 which is bent to extend inwardly, and which is closely received in a slot 102 formed in the base 28. The tab limits pivoting of the spring device about the first terminal axis 73. The tab therefore further prevents the spring device from engaging the second terminal when the two connectors are fully mated. Applicant prefers to form a pair of barbs 104 on the tab, which are bent slightly out of the plane of the rest of the tab. The barbs dig into the plastic base 28 and better anchor the spring device so it lies dose to the base. It is noted that the tab is spaced only a moderate distance from the first terminal axis 73, so it is still possible for the spring device to pivot about the first terminal axis 73.

Applicant further assures that the spring device will lie dose to its desired position, shown in solid lines in Fig. 6. If the spring device pivots by an angle G of more than 10° and preferably if it pivots by only about 5°, to the position 46B, a side edge 106 of the spring device will overhang a side location 110 of the key formed by the base 28. In that event, when the connector device is mated with the connector, the inclined side walls of the recess or keyway 80 (Fig. 8) of the connector device housing will tend to press the side edge 106 of the spring device back towards the desired position shown in solid lines in Fig. 6.

The provision of two arms 60, 62 to support the leg 64, provides some leg stability. However there is still a possibility that the leg 64 will bend and bring the legs 60, 62 closer together and thereby increase the possibility that one of them will inadvertently touch the second terminal. To avoid this, applicant provides a depression or deformation 112 in the leg 64, with the leg portion in the depression 112 being deformed out of the plane of the rest of the leg 64. The depression, which is shown in the middle of the leg but which can lie along an edge, greatly strengthens the leg against bending about an imaginary axis extending in the longitudinal directions A, B.

Thus, applicant provides several ways to avoid unwanted shorting of the terminals when the connectors are fully mated. It should be noted that the spring device 46 may be very small. A spring device constructed by applicant for an automotive air bag initiator, has an overall length L of only 6.35 mm (one-quarter Inch), so several features of the spring device are of almost microscopic dimensions. The provision of several means to keep the spring device in its preferred alignment position, reduces the possibility of a catastrophic shorting (which would prevent an air bag from deploying in a collision).

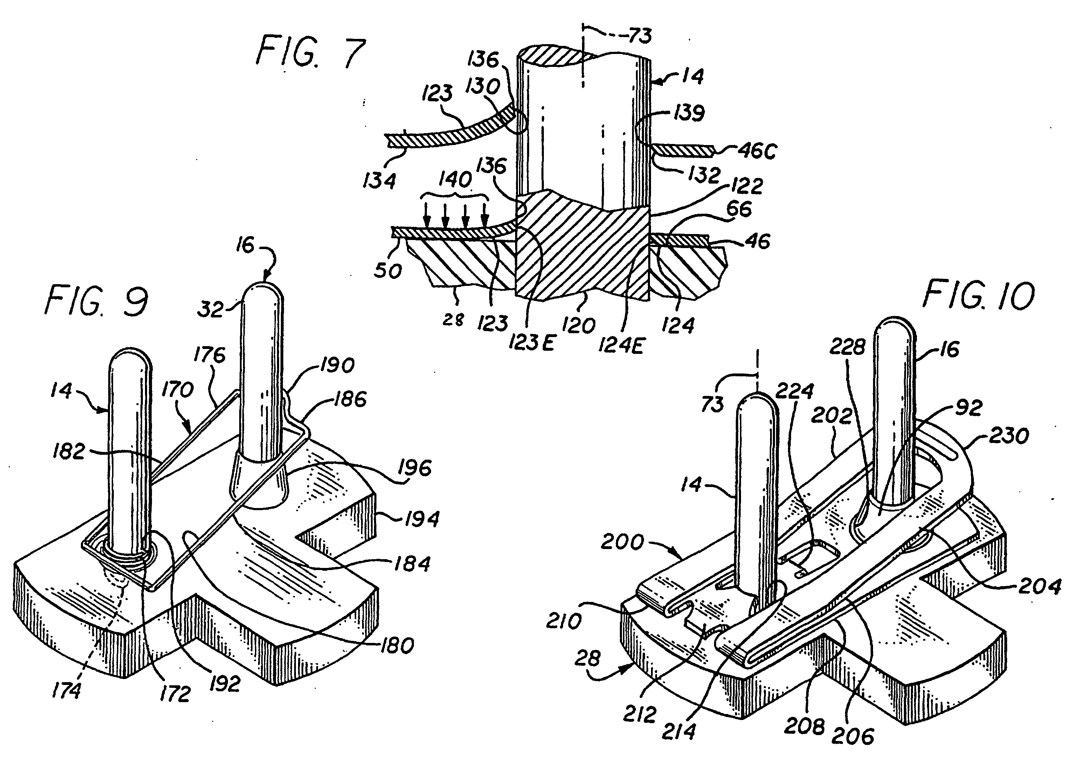

As shown in Fig. 7, each terminal such as the first one 14 is preferably formed with an interior 120 of brass and with a gold plating 122 around the brass to avoid corrosion and assure good electrical connections. Applicant constructs the anchor end 50 of the spring device so it has two abutments 123, 124 that can abut largely opposite sides of the first terminal, to securely hold the anchor end to the first terminal and assure a good electrical connection therewith. As shown in Fig. 6, the hole 90 in the anchor end Includes two slots 126, 128 that results in the two abutments 123, 124.

Referring again to Fig. 7, it can be seen that each abutment has an end 123E, 124E with a rounded Inner comer 130, 132 adjacent to the inner face 134 of the spring device, and the first abutment has a sharp comer 136 at its outer face. The rounded corners 130, 132 are provided to prevent the spring device from scratching off the softer gold on the terminal 14 as the spring device is installed. In Fig. 7, the spring device at 46C shows it, during installation, while the spring device at 46 shows it fully installed. It can be seen that the first abutment 123 is in the form of a finger that extends at an outward incline at locations progressively closer to the first terminal axis 73. When the spring device has been pushed down, applicant installs a tool around the first terminal 14 and presses down on the tool to firmly depress the finger region 140. This causes the sharp corner 136 to "dig in" or penetrate into the first terminal, through the gold layer. This is because the distance between the adjacent corners 136, 139 on the abutments is less than the width of the first terminal, if the first abutment 123 is bent down to lie on the same plane as the second one. The penetration serves to firmly anchor the spring device to the first terminal, to assure reliable electrical connection therewith, as well as to resist turning of the spring device about the first terminal.

Fig. 4 is a schematic diagram of one example of an initiator circuit, where a resistor 150 represents the resistance of the initiator charge, and a voltage source 152 tends to apply current through the initiator to fire it. A collision sensor 154 comprises a switch which closes in the event of sudden deceleration, to allow current from the voltage source 152 to pass through the initiator 150 and fire it. When the spring device 46 shorts the terminals 14, 16, sufficient current cannot flow from the voltage source to fire the initiator charge.

Applicant has designed a spring device and connector system of the construction shown in Figs. 1 - 8. The spring device 46 was constructed of beryllium copper sheet metal having a thickness of 0.10 mm (4 mils; one mill equals one thousandth inch). The spring device had an overall length L (Fig. 6) of 6.15 mm (0.242 inch) and width M of 3.05 mm (0.120 inch). The other dimensions are relative to those stated, as shown in Figs. 6 and 8. Each of the terminals around which the spring device was mounted, had an outside diameter of 1.00 mm (0.040 inch).

Fig. 9 shows a spring device 170 formed of a length of spring wire, instead of being formed of sheet metal. A spring wire has opposite ends 172, 174, and has at least one turn of a coil at each end, and preferably a plurality of turns. The spring device also has a contacting end portion 176 forming a large aperture 180 and forming a pair of arms 182, 184 with their ends connected by a transverse leg 186. The leg has a curved center 190 that closely surrounds the second terminal 16 when the spring device is in its shorting position. One of the coiled ends 174 lies in a hole 192 formed in the base 194 of the connector. An insulative isolator 196 surrounds an inner part of the second terminal free end portion 32.

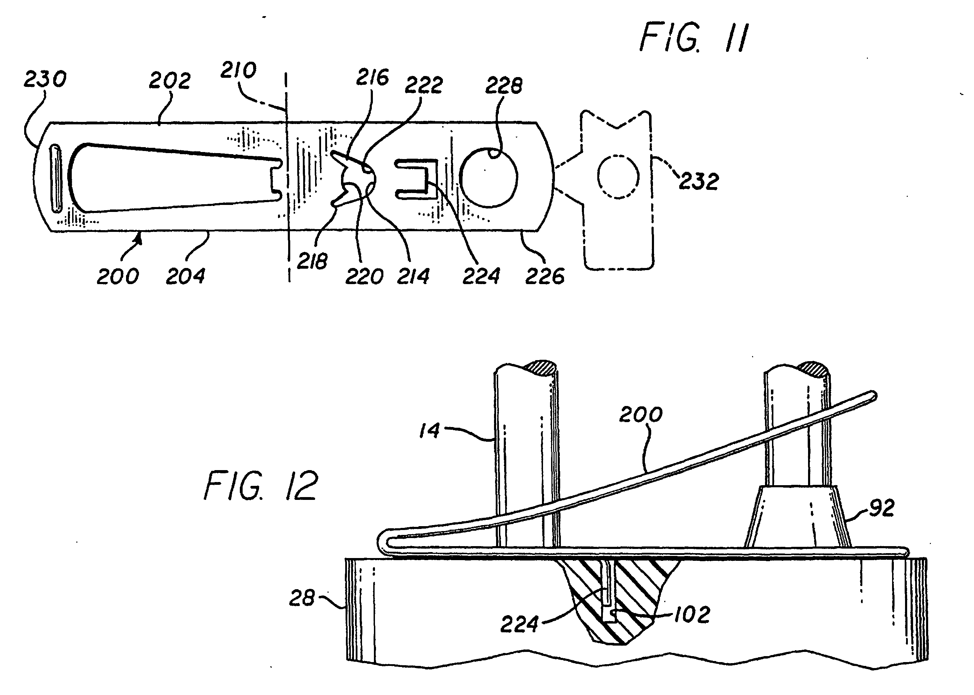

Figs. 10 - 12 show a spring device 200 which is largely similar to that of Figs. 1 - 8, but which results in longer spring arms 202, 204 for more resilience. The base 28 is of the same construction. The device includes outer and Inner parts 206, 208 connected at a substantially 180° fold at 210. An anchor end 212 is formed in the lower part, and Includes an anchor hole 214 with slots 216, 218 that result in two abutments 220, 222 that engage the terminal 14. The lower part Includes a tab 224 which is received in a slot 102 of the base. The lower part also includes an extension 226 with an opening 228 (which could be a slot) that receives the isolator 92. As a result, walls of the opening lie on opposite sides of the Isolator and further stabilize the rotational position of the device about the axis 73 of the first terminal 14.

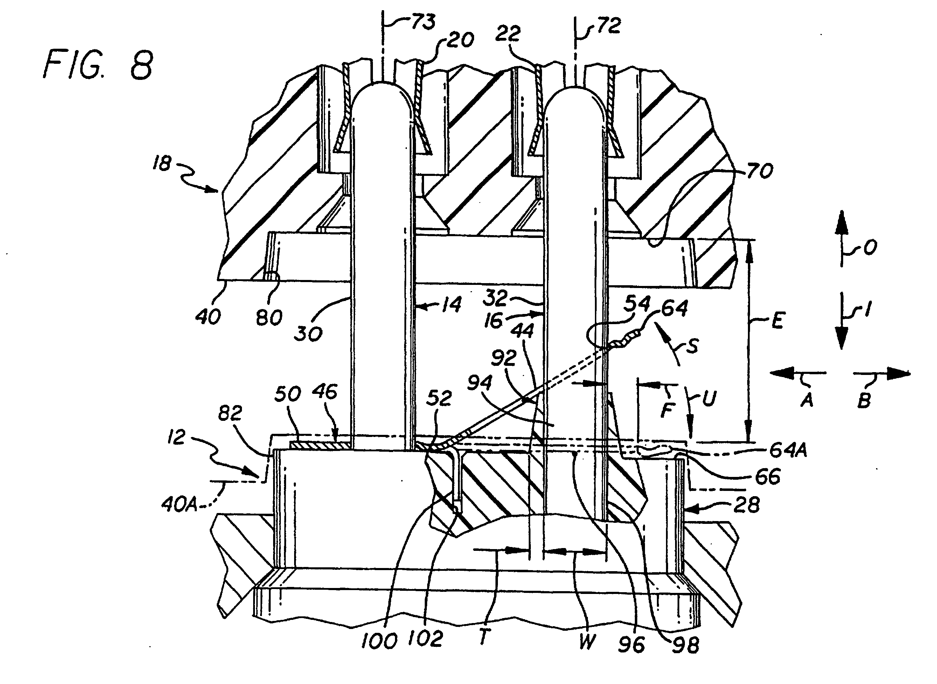

The bendable arms 202, 204 extend along substantially the entire length of the upper part, with the arm ends connected by a leg 230. Fig. 11 shows the device after it has been blanked from a large sheet of metal, but before the bending operations. The carrier which connects numerous spring devices is indicated at 232.

Thus, the invention provides a connector system and a shorting spring device for shorting a pair of terminals of a connector when that connector is not mated to another one. The spring device includes an anchor end which is anchored in place and a contacting end portion which can pivot in shorting and unshorting directions wherein it moves outwardly and against a second terminal, and inwardly and away from the second terminal. An isolator of dielectric material can surround an inner portion of the second terminal outer end portion. The Isolator prevents the contact end portion of the spring device from shifting sidewardly and touching the second terminal when the contacting end portion has been pivoted to its unshorting position. The contacting end portion, which is the portion that pivots In the shorting and unshorting directions, can include a large aperture through which the second terminal projects. The aperture forms a pair of parallel arms extending largely in a longitudinal direction and having ends joined by a laterally extending leg. The two arms stabilize the position of the leg which forms a contact location that engages the second terminal. The spring device can be formed of sheet metal with a hole that closely receives the first terminal and with a tab extending inwardly into the insulative base to limit pivoting of the spring device about the first terminal. The anchor end portion can have slots extending from the hole that closely surrounds the first terminal, to form at least two abutments spaced about the hole. Both abutments preferably have rounded Inner corners to avoid scratching the first terminal during installation, and with one of the abutments preferably having a sharp outer corner which digs into the first terminal. The spring device can be formed of a length of spring wire, preferably with coiled ends tightly engaging the first terminal. Of course, the connectors can have other terminals, although those used for automotive air bag systems generally have only two terminals.

Although particular embodiments of the invention have been described and illustrated herein, it is recognized that modifications and variations may readily occur to those skilled in the art, and consequently, it is intended that the claims be interpreted to cover such modifications and equivalents.

## Claims

1. A connector system that includes a connector (12) and a connector device (18) that can mate, said connector device (18) having an insulative housing (42) and a pair of terminal devices (20, 22), and said connector (12) having an insulative base (28, 194) and first and second terminals (14, 16) that have anchored parts anchored to said base (28, 194) and free end portions (30, 32) that extend outwardly from said base (28, 194), wherein said connector (12) includes an electrically conductive spring device (46, 170, 200) having an anchor end portion (50, 212) connected to said first terminal (14) and having a contacting end portion (44, 176, 230) which can pivot in opposite shorting and unshorting directions (S, U), wherein when said contacting end portion (44, 176, 230) pivots in said shorting direction (S) it moves both outwardly (O) and toward (A) said second terminal (16) until a contact location (54) on said contacting end portion (44, 176, 230) engages said second terminal (16), and wherein said housing (42) pushes inwardly (I) against said contacting end portion (44,176, 230) when said connector (12) and connector device (18) mate, to force said contacting end portion (44, 176, 230) to pivot in said unshorting direction (U) wherein said contact location (54) moves both inwardly (I) and away (B) from said second terminal (16), **characterized by**:
an isolator (92, 196) of insulative material which *at least partially surrounds* an inner part (94) of said second terminal free end portion (32) to prevent said contacting end portion (44, 176, 230) of said spring device (46, 170, 200) from touching said second terminal (16) when said connector (12) and connector device (18) are fully mated and said contacting end portion (44, 176, 230) has been fully pivoted in said unshorting direction (U).

2. Connector system as described in claim 1 wherein:
said isolator (92, 196) has an inner location (96) that lies beside said contact location (54) when said contacting end portion (44, 176, 230) has been fully pivoted in said unshorting direction (U), said isolator inner location (96) having a thickness (T) less than the width (W) of said second terminal (16) at said inner location (96).

3. Connector system as claimed in at least one of claims 1 or 2 wherein:
said isolator (92, 196) is tapered in width, with said isolator (92, 196) having an outer end of least width.

4. Connector system as claimed in at least one of claims 1 to 3 wherein:
said spring device (46, 200) comprises a piece of sheet metal, with said anchor end portion (50, 212) having a hole (90, 214) which closely receives said first terminal (14); said base (28) has a slot (102), and said spring device (46, 200) has a tab (100, 224) which projects inwardly into said slot (102), to limit pivoting of said spring device (46, 200) about said first terminal (14).

5. Connector system as claimed in at least one of claims 1 to 4 wherein:
said spring device (46,200) is formed of sheet metal, and said contacting end portion (44, 230) has an aperture and forms opposite arms (60, 62; 202, 204) that lie on laterally opposite sides of said second terminal (16) and also forms a largely laterally extending leg (64, 230) that connects said arms (60, 62; 202, 204) and that lies on a side of said second terminal (16) that is opposite to said first terminal (14); said leg (64, 230 ) having an elongated depression (112) extending in a direction along the length of said leg, to resist bowing of the contact end portion.

6. Connector system as claimed in at least one of claims 1 to 5 wherein:
said spring device (46, 200) comprises a piece of sheet metal, and said anchor end portion (50, 212) has a hole (90, 214) which closely receives said first terminal (14); said anchor end portion (50, 212) having a plurality of slots (126, 128; 216, 218) extending from said hole (90, 214) and forming a plurality of separate terminal abutments (123, 124; 220, 222) spaced about said hole (90, 214) each having inner and outer faces (134) and each having an end (123E, 124E) that engages said first terminal (14), with said end of each abutment forming a rounded comer portion (130,132) at said inner face(134), and with at least one of said abutments (123, 124; 220, 222) having a sharp comer (136) at said outer face which penetrates into said first terminal (14).

7. Connector system as claimed in at least one of claims 1 to 6 wherein:
said spring device (46) includes outer and inner parts (206, 208) connected at a substantially 180° fold which lies on a side of said first terminal (14) which is opposite said second terminal (16), said inner part (208) forming said anchor end portion (212) and said outer part forming said contacting end portion (44) and being free of restraint except of said fold to thereby provide a long beam.

8. The connector system described in claim 7 wherein:
said inner part (208) includes an opening forming opening walls that lie on opposite sides of said isolator (92).

9. Connector system as claimed in at least one of claims 1 to 3 wherein:
said spring device (46) comprises a length of spring wire, with a portion of said wire forming said contacting end portion (176) extending in a loop around said second terminal (16), with said wire portion biased in said shorting direction (S) but being pivotal in said unshorting direction (U) to a position substantially against said base (28).

10. Connector system as claimed in at least one of claims 1 to 3 wherein:
said spring device (46) comprises a length of spring wire which has at least one turn that forms said anchor end portion and that is tightly wound about said first terminal (14) to anchor said wire to said first terminal (14), said wire extending in a loop about second terminal (16), with said loop being pivotable to pivot in said shorting and un shorting directions (S, U).

11. Connector system as claimed in at least one of claims 1 to 10 wherein:
said base (28) of said connector (12) has an outer surface portion (42) forming a key with opposite side locations on opposite sides of said second terminal (16), and said housing (42) of said connector device (18) having a recess forming a keyway (80) that closely receives said key as said connector (12) and connector device (18) mate; said contact end portion (44,176) of said spring device (46, 170, 200) has opposite edges that lie near enough to said opposite side locations of said key, that each of said spring device edges will overhang a corresponding one of said key side locations if said spring device (46, 170, 200) is turned more than 10° from a desired position wherein said spring device edges (106) are equally spaced from said key opposite side locations.

12. A connector (12) which has an insulative base (28) and first and second terminals (14, 16) that project outwardly from a surface of said base (28) and which are constructed to mate with terminal devices (20, 22) of a mating connector device (18) which has a housing (42) that will closely approach said base surface when said connectors (12, 18) mate, wherein said terminals (14,16) must be continually shorted except when said connector (12) is mated to said connector device (18), comprising:
a spring device (46) which is formed of sheet metal and which has an anchor end (50) with a hole (90) that closely receives said first terminal (14),
said spring device (46) having a contacting end portion (44) which can move partially in said outward direction (O) and against said second terminal (16), but which is pressed by said housing (42) of said connector device (18) in an inward direction (I) and out of contact with said second terminal (16) when said connector device(18) mates with said connector (12);
*an isolator (92) of dielectric material lying about a portion of said second terminal (16), which said contacting end portion (44) substantially lies about when said contacting end portion (44) is in its innermost position (64A) when said connector (12) and connector device (18) are mated, said isolator (92) having an outer end lying rearward of the location where said contacting outer end moves against* said *second terminal (16).*
said base (28) has a slot (102), and said spring device (46) has a tab (100) that extends inwardly into said slot (102).

13. A connector (12) which has an insulative base (28) and first and second terminals (14, 16) that are longitudinally spaced apart and that project outwardly from a surface of said base (28) and which are constructed to mate with terminal devices (20, 22) of a mating connector device (18) which has a housing (42) that will closely approach said base (28) when said connectors (12, 18) mate, wherein said longitudinal and outward directions are normal to each other and to a lateral direction, wherein said terminals (14, 16) must be continually shorted except when said connector (12) is mated to said connector device (18), comprising:
a spring device (46) which is formed of sheet metal, said spring device (46) having an anchor end (50) with a hole (90) that closely receives and is anchored to said first terminal (14), said spring device (46) also having a contacting end portion (44) which has an aperture through which said second terminal (16) extends and which forms a pair of opposite arms (60, 62) that extend largely in said longitudinal direction and which lie on laterally opposite sides of said second terminal (16), said contacting end portion (44) having a laterally extending leg (64) that connects said arms (60, 62), with each arm extending from near said anchor end (50) to said leg (64), said contacting end portion (44) being biased to pivot in a shorting direction (S) so said leg (64) moves outwardly (O) and against second terminal (A), with said pair of arms (60, 62) stabilizing the orientation of said leg (64), but said contacting end portion (44) being pivotable in an opposite unshorting direction *(U)*, and
*an isolator (92) of dielectric material surrounding a portion of said second terminal (16) that lies beside said leg (64) of said contact end portion (44) when said contact end portion (44) is pivoted in said unshorting direction (U) to an unshorting position (64A), said isolator (92) having an outer end that lies inward of where said leg moves against terminal (16) when said contact end portion (44) pivots in said shorting direction (S).*

14. Connector as claimed in claims 13 wherein:
said leg (64) has an elongated portion (112) extending parallel to said leg (64) and deformed out of the plane of the sheet metal of said leg (64), to avoid warping of said contact end portion (44).

15. Connector as claimed in claim 13 or 14 wherein:
said base (28) has a slot (102) extending inwardly therein, and said spring device (46) has a tab (100) which is received in said slot (102).

16. Connector as claimed in at least one of claims 13 to 15 comprising:
a spring device (46) which includes inner and outer parts (206, 208) connected by a fold, said inner part (208) being anchored to said first terminal (14) and said fold lying on a side of said first terminal (14) which is opposite said second terminal (16), said outer part (206) being free of restraint except at said fold and being biased to move largely outwardly but being positioned to be deflected inwardly by said second connector device (18) during mating, with said outer part (206) having a contact location (54) lying on a side of said second terminal (16) opposite said first terminal (14), said contact location (54) moving outwardly (O) and toward (A) said second terminal (16) and eventually against said second terminal (16), as said outer part (206) moves outwardly (O).

17. A connector (12) comprising:
an insulative base (28);
a plurality of terminals (14, 16) mounted in said base (28) and having free end portions (30, 32) extending in an outward direction from said base (28);
a spring device (46) which is formed of sheet metal and which has an anchor end portion (50) *having a hole (90)* anchored to a first of said terminals and a contact end portion (44) which can engage a second of said terminals;
*said spring can pivot in opposite shorting and unshorting directions (S, U);*
*an isolator (92, 196) of insulative material which at least partially surrounds an inner part (94) of said second terminal free end portion (32) no prevent said contacting end portion (44) of said spring device (46) from touching said second terminal (16) when said connector (12) and connector device (18) are fully mated and said contacting end portion (44, 176, 230) has- been fully pivoted in said unshorting direction (U)*.
said anchor end portion (50) having a plurality of slots (126, 128) extending from said hole (90) and forming a plurality of separate terminal abutments spaced about said hole (90) each having inner and outer faces (134) and each having an end (123E, 124E) that engages said first terminal (14), with said end of each abutment (123,124) forming a rounded comer portion (130,132) at said inner face (134).

18. Connector described in claim 17 wherein:
at least one of said abutments (123, 124) has a terminal engaging end that forms a sharp comer (136) at said outer face and that penetrates into said first terminal.

19. Connector as claimed in at least one of claims 17 or 18 wherein:
said base (28) has a slot (102), and said spring device (46) has a tab (100) which projects inwardly into said slot (102), and which limits pivoting of said spring device (46) about said first terminal.

20. A method for constructing a connector (12) that has an insulative base (28) and a pair of terminals (14, 16) mounted in the base (28) and having free end portions (30, 32) that extend outwardly from the base (28), and that includes a spring device (46) connected to said first terminal (14) and having a contacting end portion (44) that can move outwardly (O) and also in a sideward direction that is perpendicular to said outward direction (O) toward said second terminal (16) to a shorting position (S) to engage a location on said second terminal (16), and wherein said contact end can move inwardly (I) and also sidewardly away (B) from said terminal (16) to an unshorted position (64A), wherein the method safeguards against said contacting end portion (44) touching said second terminal (16) when it has moved to said unshorted position (64A), **characterized by**:
forming said base (28) with an isolator (92, 196) that *at least partially surrounds* an inner portion (94) of said terminal free end portion (32), but which has a thickness (T) no more than the width (W) of said second terminal (16), to form a barrier that prevents said contacting end portion (44) in said unshorted position (64A) from moving sidewardly but not outwardly (O) and touching said second terminal (16), while avoiding interference with movement of said contact end (44) to said unshorting position (64A).

21. The method described in claim 20 including:
forming said base (28) with an inwardly extending slot (102);
forming said spring device (46) of sheet metal, with walls forming a hole (90) and with a tab (100) that extends at substantially a right angle from an adjacent portion of said sheet metal;
moving said spring device (46) so the walls of said hole (90) receive said first terminal (14) to connect to said first terminal (14) and to prevent sideward translation of said spring device (46), and moving said tab (100) inwardly into said slot (102), to limit pivoting of said spring device (46) about said first terminal (14).

## Patentansprüche

1. Steckersystem, das folgendes aufweist: einen Stecker (12) und eine Steckvorrichtung (18), die paarweise zusammengeführt werden können, wobei die Steckvorrichtung (18) ein Isoliergehäuse (42) und ein Paar von Anschluss-Vorrichtungen (20, 22) aufweist, und der Stecker (12) eine isolierende Basis (28, 194) und erste und zweite Anschlüsse (14, 16) aufweist, die in der Basis (28, 194) verankert sind, und freie Anschlussteile (30, 32), die von der Basis (28, 194) nach außen ragen, aufweisen, wobei der Stecker (12) eine elektrisch leitende Federvorrichtung (46, 170, 200) mit einem verankerten Endteil (50, 212), das mit der ersten Anschlussstelle (14) verbunden ist, und einem Kontakt-Endteil (44, 176, 230), der sich in eine kurzschließende und nicht kurzschließende Gegenrichtungen (S, U) drehen kann, aufweist, wobei sich das Kontakt-Endteil (44, 176, 230) beim Drehen in die kurzschließende Richtung (S) sowohl nach außen (O) als auch in die Richtung (A) des zweiten Anschlusses (16) bewegt, bis eine Kontaktstelle (54) auf dem Kontakt-Endteil (44, 176, 230) den zweiten Anschluss (16) berührt, und wobei das Gehäuse (42) nach innen (I) gegen den Kontakt-Endteil (44, 176, 230) drückt, wenn Stecker (12) und Steckvorrichtung (18) paarweise zusammengeführt werden, um den Kontakt-Endteil (44, 176, 230) zur Drehung in die nicht kurzschließende Richtung (U) zu veranlassen, wobei sich die Kontaktstelle (54) sowohl nach innen (I) als auch vom zweiten Anschluss (16) weg (B) bewegt, **gekennzeichnet durch**:
einen Isolator (92, 196) aus Isoliermaterial, der mindestens teilweise einen inneren Teil (94) des zweiten freien Anschluss-Endteils (32) umgibt, um zu verhindern, daß das kontaktierende Endteil (44, 176, 230) der Federvorrichtung (46, 170, 200) den zweiten Anschluss (16) berührt, wenn Stecker (12) und Steckvorrichtung (18) vollständig paarweise zusammengefügt wurden und der Kontakt-Endteil (44, 176, 230) vollständig in die nicht kurzschließende Richtung (U) gedreht wurde.

2. Steckersystem nach Anspruch 1, wobei:
der Isolator (92, 196) eine innere Stelle (96) aufweist, die dicht neben der Kontaktstelle (54) liegt, wenn der Kontakt-Endteil (44, 176, 230) vollständig in die nicht kurzschließende Richtung (U) gedreht worden ist, wobei die isolierende innere Stelle (96) eine Dicke (T) aufweist, die geringer ist als die Breite (W) des zweiten Anschlusses (16) an der inneren Stelle (96).

3. Steckersystem nach mindestens einem der Ansprüche 1 oder 2, wobei:
der Isolator (92, 196) sich in der Breite verjüngt, wobei der Isolator (92, 196) ein äußeres Ende mit geringster Breite aufweist.

4. Steckersystem nach mindestens einem der Ansprüche 1 bis 3, wobei:
die Federvorrichtung (46, 200) ein Stück Metallblech aufweist, wobei der Anker-Endteil (50, 212) ein Loch (90, 214) aufweist, das den erste Anschluss (14) eng umschließend aufnimmt; wobei die Basis (28) einen Schlitz (102) und die Federvorrichtung (46, 200) einen Vorsprung (100, 224) aufweist, das in den Schlitz (102) nach innen hineinragt, um die Drehung der Federvorrichtung (46, 200) um den ersten Anschluss (14) zu begrenzen.

5. Steckersystem nach mindestens einem der Ansprüche 1 bis 4, wobei:
die Federvorrichtung (46, 200) aus Metallblech geformt ist und der kontaktierende Endteil (44, 230) eine Öffnung aufweist und gegenüberliegende Schenkel (60, 62; 202, 204) bildet, die auf seitlich gegenüberliegenden Seiten des zweiten Anschlusses (16) liegen, und ferner einen weit zur Seite verlaufenden Schenkel (64, 230) bildet, der die Schenkel (60, 62; 202, 204) verbindet und der auf einer Seite des zweiten Anschlusses (16) liegt, die dem ersten Anschluss (14) gegenüber liegt; wobei der Schenkel (64, 230) eine längliche Vertiefung (112) aufweist, die in Richtung entlang der Länge des Schenkels verläuft, um dem Biegen des Kontakt-Endteils Widerstand entgegenzusetzen.

6. Steckersystem nach mindestens einem der Ansprüche 1 bis 5, wobei:
die Federvorrichtung (46, 200) ein Stück Metallblech aufweist, und der Anker-Endteil (50, 212) ein Loch (90, 214) aufweist, das den ersten Anschluss (14) eng umschlossen aufnimmt; wobei der Anker-Endteil (50, 212) eine Vielzahl von Schlitzen (126, 128; 216, 218) aufweist, die von dem Loch (90, 214) ausgehen und eine Vielzahl von getrennten endständigen, um das Loch (90, 214) beabstandeten Widerlagern (123, 124; 220, 222) jeweils mit Innen- und Außenflächen (134) und jeweils mit einem Ende (123E, 124E), das den ersten Anschluss (14) greift, bilden, wobei jeweils das Ende eines Widerlagers einen Teil (130, 132) mit abgerundeten Ecken an der Innenfläche (134) bildet und wobei mindestens eines der Widerlager (123, 124; 220, 222) eine spitze Ecke (136) an der Außenfläche aufweist, die in den ersten Anschluss (14) eindringt.

7. Steckersystem nach mindestens einem der Ansprüche 1 bis 6, wobei:
die Federvorrichtung (46) äußere und innere Teile (206, 208) aufweist, die im wesentlichen über eine 180°-Faltung verbunden sind, die auf einer Seite des ersten Anschlusses (14) liegt, die dem zweiten Anschluss (16) entgegengesetzt ist, wobei der innere Teil (208) den Anker-Endteil (212) und der äußere Teil den Kontakt-Endteil (44) bildet und die mit Ausnahme der Faltung spannungsfrei sind, wodurch ein langer Arm bereitgestellt wird.

8. Steckersystem nach Anspruch 7, wobei:
der innere Teil (208) öffnungsbilden Öffnungswände, die auf gegenüberliegenden Seiten des Isolators (92) liegen, aufweist.

9. Steckersystem nach mindestens einem der Ansprüche 1 bis 3, wobei:
die Federvorrichtung (46) eine Länge von Federdraht aufweist, wobei ein Teil des Drahts, der den Kontakt-Endteil (176) bildet, in einer Schleife um den zweite Anschluss (16) verläuft, wobei der Drahtteil in die kurzschließende Richtung (S) gebogen ist, jedoch in die nicht kurzschließende Richtung (U) in eine Position im wesentlichen gegen die Basis (28) drehbar ist.

10. Steckersystem nach mindestens einem der Ansprüche 1 bis 3, wobei:
die Federvorrichtung (46) eine Länge von Federdraht aufweist, die mindestens eine Drehung aufweist, die den Anker-Endteil bildet und die unter Verankerung des Drahts an dem ersten Anschluss (14) fest um den ersten Anschluss (14) gewickelt ist, wobei der Draht in einer Schleife um den zweite Anschluss (16) verläuft, wobei die Schleife unter Drehung in die kurzschließende und nicht kurzschließende Richtung (S, U) drehbar ist.

11. Steckersystem nach mindestens einem der Ansprüche 1 bis 10, wobei:
die Basis (28) des Steckers (12) einen äußeren Flächenteil (42) aufweist, der mit den gegenüberliegenden seitlichen Stellen auf gegenüberliegende Seiten des zweiten Anschlusses (16) einen Keil bildet, und wobei das Gehäuse (42) der Steckvorrichtung (18) eine Aussparung aufweist, die eine Keilnut (80) bildet, die den Keil während des Zusammengehens von Stecker (12) und Steckvorrichtung (18) eng umschließend aufnimmt; wobei der Kontakt-Endteil (44, 176) der Federvorrichtung (46, 170, 200) gegenüberliegende Kanten aufweist, die nahe genug an den gegenüberliegenden seitlichen Stellen des Keils liegen, daß die Kanten der Federvorrichtung jeweils über eine entsprechende der Keil-Seitenstellen überhängen, wenn die Federvorrichtung (46, 170, 200) um mehr als 10° aus einer gewünschten Position, wobei die Kanten (106) der Federvorrichtung von den gegenüberliegenden seitlichen Keilstellen gleich beabstandet sind, heraus gedreht wird.

12. Stecker (12), der eine isolierende Basis (28) und erste und zweite Anschlüsse (14, 16) aufweist, die von einer Oberfläche der Basis (28) nach außen ragen und die so aufgebaut sind, daß sie mit den Anschluss-Vorrichtungen (20, 22) einer passenden Steckvorrichtung (18) zusammenpassen, die ein Gehäuse (42) aufweist, das beim Zusammengehen der Stecker (12, 18) nahe an die Basisfläche herankommt, wobei die Anschlüsse (14, 16) kontinuierlich verkürzt werden müssen, außer beim paarweisen Zusammenführen von Stecker (12) und Steckvorrichtung (18),
der folgendes aufweist:
eine Federvorrichtung (46), die aus Metallblech geformt ist und die ein Ankerende (50) mit einem Loch (90), das den ersten Anschluss (14) fest umschließend aufnimmt, aufweist,
wobei die Federvorrichtung (46) einen Kontakt-Endteil (44) aufweist, der sich teilweise nach außen (O) und gegen den zweiten Anschluss (16) bewegen kann, der allerdings von dem Gehäuse (42) der Steckvorrichtung (18) nach innen (I) und aus dem Kontakt mit dem zweiten Anschluss (16) heraus gedrückt wird, wenn Steckvorrichtung (18) und Stecker (12) paarweise zusammengeführt werden;
einen Isolator (92) aus dielektrischem Material, der einen Teil des zweiten Anschlusses (16) umgibt, den der kontaktierende Endteil (44) im wesentlichen umgibt, wenn sich der kontaktierende Endteil (44) in seiner innersten Position (64A) befindet, wenn Stecker (12) und Steckvorrichtung (18) paarweise zusammengeführt werden, wobei der Isolator (92) ein äußeres Ende aufweist, das hinter der Stelle liegt, an der sich das kontaktierende Außenende gegen den zweiten Anschluss (16) bewegt,
wobei die Basis (28) einen Schlitz (102) und die Federvorrichtung (46) einen Vorsprung (100) aufweist, das nach innen in den Schlitz (102) hinein ragt.

13. Stecker (12), der eine isolierende Basis (28) und erste und zweite Anschlüsse (14, 16) aufweist, die längs beabstandet sind und die von einer Oberfläche der Basis (28) nach außen ragen und die so aufgebaut sind, daß sie mit den Anschluss-Vorrichtungen (20, 22) einer passenden Steckvorrichtung (18) zusammen passen, die ein Gehäuse (42) aufweist, das der Basis (28) beim Zusammenführen der Stecker (12, 18) sehr nahe kommt, wobei die Längs- und Außenrichtungen senkrecht zueinander und zu einer seitlichen Richtung sind, wobei die Anschlüsse (14,16) kontinuierlich verkürzt werden müssen, außer beim Zusammenführen des Steckers (12) mit der Steckvorrichtung (18), der folgendes aufweist:
eine Federvorrichtung (46), die aus Metallblech geformt ist, wobei die Federvorrichtung (46) ein Ankerende (50) mit einem Loch (90), das den ersten Anschluss (14) fest umschließend aufnimmt und an ihm verankert ist, aufweist, wobei die Federvorrichtung (46) ferner einen Kontakt-Endteil (44) aufweist, in dem eine Öffnung vorhanden ist, durch die der zweite Anschluss (16) verläuft und die ein Paar von gegenüberliegenden Schenkeln (60, 62) bilden, die weitgehend in Längsrichtung verlaufen und die auf seitlich gegenüber liegenden Seiten des zweiten Anschlusses (16) liegen, wobei der kontaktierende Endteil (44) einen seitlich verlaufenden Schenkel (64) aufweist, der die Schenkel (60, 62) verbindet, wobei jeder Schenkel von der Nähe des Ankerendes (50) zu dem Schenkel (64) verläuft, wobei der kontaktierende Endteil (44) unter Drehung in einer kurzschließende Richtung (S) gebogen wird, so daß sich der Schenkel (64) nach außen (O) und gegen den zweiten Anschluss (A) bewegt, wobei das Paar von Schenkeln (60, 62) die Orientierung des Schenkels (64) stabilisiert, der kontaktierende Endteil (44) allerdings in einer nicht kurzschließende Gegenrichtung (U) drehbar ist, und
einen Isolator (92) aus dielektrischem Material, der einen Teil des zweiten Anschlusses (16) umgibt, der neben dem Schenkel (64) des Kontakt-Endteils (44) liegt, wenn der Kontakt-Endteil (44) in der nicht kurzschließenden Richtung (U) in eine nicht kurzschließende Position (64A) gedreht wird, wobei der Isolator (92) ein äußeres Ende aufweist, das von dort aus innen liegt, wovon sich der Schenkel beim Drehen des Kontakt-Endteils (44) in die kurzschließende Richtung (S) gegen den Anschluss (16) bewegt.

14. Stecker nach Anspruch 13, wobei:
der Schenkel (64) einen länglichen Teil (112) aufweist, der parallel zu dem Schenkel (64) verläuft und aus der Ebene des Metallblechs des Schenkels (64) heraus verformt wird, um ein Verbiegen des Kontakt-Endteils (44) zu vermeiden.

15. Stecker nach Anspruch 13 oder 14, wobei:
die Basis (28) einen Schlitz (102) aufweist, der darin nach innen verläuft und die Federvorrichtung (46) einen Vorsprung (100) aufweist, das in dem Schlitz (102) aufgenommen wird.

16. Stecker nach mindestens einem der Ansprüche 13 bis 15, der folgendes aufweist:
eine Federvorrichtung (46), die innere und äußere Teile (206, 208) aufweist, die über eine Faltung verbunden sind, wobei der innere Teil (208) an dem ersten Anschluss (14) verankert ist und die Faltung auf einer Seite des ersten Anschlusses (14) liegt, die dem zweiten Anschluss (16) entgegengesetzt ist, wobei der äußere Teil (206) spannungsfrei ist, mit Ausnahme der Faltung und mit der Ausnahme, daß er unter weitgehender Bewegung nach außen gekrümmt, allerdings so positioniert wird, daß er durch die zweite Steckvorrichtung (18) während des paarweisen Zusammengehens nach innen gebogen ist, wobei der äußere Teil (206) eine Kontaktstelle (54) aufweist, die auf einer Seite des zweiten Anschlusses (16) gegenüber dem ersten Anschluss (14) liegt, wobei sich die Kontaktstelle (54) nach außen (O) und in Richtung (A) des zweiten Anschlusses (16) und gegebenenfalls gegen den zweiten Anschluss (16) bewegt, wenn sich der äußere Teil (206) nach außen (O) bewegt.

17. Stecker (12), der folgendes aufweist:
eine isolierende Basis (28);
eine Vielzahl von Anschlüssen (14, 16), die in der Basis (28) befestigt sind, mit freien Anschlussteilen (30, 32), die von der Basis (28) nach außen verlaufen;
eine Federvorrichtung (46), die aus Metallblech geformt ist und die ein Ankerendteil (50) mit einem Loch (90), der an einem ersten der Anschlüsse verankert ist, und einen Kontakt-Endteil (44), der einen zweiten der Anschlüsse greifen kann, aufweist;
wobei sich die Feder in gegenüberliegende kurzschließende und nicht kurzschließende Richtungen (S, U) drehen kann;
einen Isolator (92, 196) aus Isoliermaterial, der mindestens teilweise einen inneren Teil (94) des zweiten endständigen freien Endteils (32) umgibt, um zu verhindern, daß der kontaktierende Endteil (44) der Federvorrichtung (46) den zweite Anschluss (16) berührt, wenn der Stecker (12) und Steckvorrichtung (18) vollständig paarweise zusammengeführt werden und der kontaktierende Endteil (44, 176, 230) vollständig in die nicht kurzschließende Richtung (U) gedreht worden ist,
wobei der Ankerendteil (50) eine Vielzahl von Schlitzen (126, 128) aufweist, die von dem Loch (90) ausgehen und eine Vielzahl von getrennten entständigen, um das Loch (90) beabstandeten Widerlagern mit jeweils inneren und äußeren Flächen (134) und mit jeweils einem Ende (123E, 124E), das den erste Anschluss (14) greift, bilden, wobei das Ende eines jeden Widerlagers (123, 124) einen Teil mit abgerundeten Ecken (130, 132) an der Innenfläche (134) bildet.

18. Stecker nach Anspruch 17, wobei:
mindestens eines der Widerlager (123, 124) ein endständiges Greifende aufweist, das eine spitze Ecke (136) an der Außenfläche bildet und das in den ersten Anschluss eindringt.

19. Steckersystem nach mindestens einem der Ansprüche 17 oder 18, wobei die Basis (28) einen Schlitz (102) hat, und die Federvorrichtung (46) einen Vorsprung (100) aufweist, der in den Schlitz hineinragt und die Beweglichkeit der Federvorrichtung entlang des ersten Anschlusses begrenzt.

20. Verfahren zur Herstellung einen Steckers (12) der eine isolierende Basis (28) und ein Paar Anschlüsse (14, 16) aufweist, die auf der Basis (28,) befestigt sind, und freie Anschlussteile (30, 32), die von der Basis (28, 194) nach außen ragen, aufweisen, wobei der Stecker (12) eine elektrisch leitende Federvorrichtung (46) die mit dem ersten Anschluss (14) verbunden ist, und einem Kontakt-Endteil (44), der sich sowohl nach außen (O) und auch in eine seitliche Richtung die senkrecht zur Auswärtsrichtung (O) ist zum zweiten Anschluss (16) hin bewegen kann in eine kurzschließende Position (S) bei der der zweite Anschluss berührt wird, und wobei das Kontakt-Endteil nach innen (I) und zusätzlich seitlich weg (B) vom zweiten Anschluss (16) in eine nicht-kurzschließende Position (64A) bewegt werden kann, wobei das Verfahren davor schützt , dass das Kontakt-Endteil (44) den zweiten Anschluss berührt wenn es in die nicht-kurzschließende Position (64A) bewegt wurde, **gekennzeichnet durch**:
Herstellung der Basis (28) mit einem Isolator (92, 196) der mindestens teilweise einen inneren Teil (94) des zweiten freien Anschluss-Endteils (32) umgibt, der aber eine Dicke (T) von nicht mehr als der Breite (W) des zweiten Anschlusses (16) hat, um eine Barriere zu bilden die verhindert, dass das kontaktierende Endteil (44) in der nicht-kurzschließende Position (64A) seitlich aber nicht auswärts(O) bewegt wird und dabei den zweiten Anschluss (16) berührt, aber nicht die Bewegung des kontaktierenden Endteils (44) in die nicht-kurzschließende Position (64A) behindert.

21. Verfahren nach Anspruch 20, zusätzlich beinhaltend:
Herstellen der Basis (28) mit einem nach innen weisenden Schlitz (102);
Herstellen der Federvorrichtung (26) aus Blech, mit Wänden die eine Öffnung (90) bilden und mit einem Vorsprung (100) der im wesentlichen senkrecht von der nebenliegenden Bereich des Bleches absteht;
Bewegen der Federvorrichtung so dass die Wände der Öffnung (90) den ersten Anschluss (14) aufnehmen und zur Verhinderung einer seitlichen Bewegung der Federvorrichtung (46), der Vorsprung (100) in den Schlitz (102) bewegt wird, womit eine Drehbewegung der Federvorrichtung (46) gegenüber dem ersten Anschluss (14) begrenzt wird.

## Revendications

1. Système connecteur qui inclut un connecteur (12) et un dispositif connecteur (18) qui peuvent s'accoupler, ledit dispositif connecteur (18) ayant un boîtier isolant (42) et une paire de dispositifs formant bornes (20, 22), et ledit connecteur (12) ayant une base isolante (28, 194) et une première et une deuxième borne (14, 16) qui comprennent des parties d'ancrage ancrées sur ladite base (28, 194) et des parties terminales libres (30, 32) qui s'étendent vers l'extérieur depuis ladite base (28, 194), dans lequel ledit connecteur (12) inclut un dispositif à ressort électriquement conducteur (46, 170, 200) ayant une partie terminale d'ancrage (50, 212) connectée à ladite première borne (14) ayant une partie terminale de mise en contact (44, 176, 230) qui est capable de pivoter dans des directions opposées de mise en court-circuit et de rupture de court-circuit (S, U), dans lequel lorsque ladite partie terminale de mise en circuit (44, 176, 230) pivote dans ladite direction de mise en court-circuit (S) elle se déplace à la fois vers l'extérieur (O) et en direction (A) de ladite deuxième borne (16) jusqu'à ce qu'un emplacement de contact (54) sur ladite partie terminale de mise en contact (44, 176, 230) engage ladite deuxième borne (16), dans lequel ledit boîtier (42) pousse vers l'intérieur (I) contre ladite partie terminale de mise en contact (44, 176, 230) quand ledit connecteur (12) et ledit dispositif connecteur (18) s'accouplent, pour forcer ladite partie terminale de mise en contact (44, 176, 230) à pivoter dans ladite direction de rupture de court-circuit (U), et ledit emplacement de contact (54) se déplace à la fois vers l'intérieur (I) et en éloignement (B) depuis ladite deuxième borne (16), **caractérisé par** :
un isolateur (92, 196) en matériau isolant qui entoure au moins partiellement une partie intérieure (94) de ladite deuxième partie terminale libre (32) pour empêcher à ladite partie terminale de mise en contact (44, 176, 230) dudit dispositif à ressort (46, 170, 200) de venir toucher ladite deuxième borne (16) quand ledit connecteur (12) et ledit dispositif connecteur (18) sont totalement accouplés et que ladite partie terminale de mise en contact (44, 176, 230) a été totalement pivotée dans ladite direction de rupture de court-circuit (U).

2. Système connecteur selon la revendication 1, dans lequel ledit isolateur (92, 196) présente un emplacement intérieur (96) qui est situé à côté dudit emplacement de contact (54) quand ladite partie terminale de mise en contact (44, 176, 230) a été totalement pivotée dans ladite direction de rupture de court-circuit (U), ledit emplacement intérieur (96) de l'isolateur ayant une épaisseur (T) inférieure à la largeur (W) de ladite deuxième borne (16) audit emplacement intérieur (96).

3. Système connecteur selon l'une au moins des revendications 1 et 2, dans lequel ledit isolateur (92, 196) est effilé en largeur, ledit isolateur (92, 196) ayant une extrémité extérieure de moindre largeur.

4. Système connecteur selon l'une au moins des revendications 1 à 3, dans lequel ledit dispositif à ressort (46, 200) comprend un morceau de tôle métallique, ladite partie d'extrémité d'ancrage (50, 212) ayant un trou (90,214) qui reçoit de façon intime ladite première borne (14) ; ladite base (28) comporte une fente (102), et ledit dispositif à ressort (46, 200) comprend une languette (5, 224) qui se projette vers l'intérieur dans ladite fente (102) afin de limiter le pivotement dudit dispositif à ressort (46, 200) autour de ladite première borne (14).

5. Système connecteur selon l'une au moins des revendications 1 à 4, dans lequel ledit dispositif à ressort (46, 200) est formé en tôle de métal, et ladite partie terminale de mise en contact (44, 230) comporte une ouverture et forme des bras opposés (60,62 ; 202, 204) qui sont situés sur des côtés latéralement opposés de ladite deuxième borne (16) et forme également un pied (64, 230) qui s'étend largement latéralement et qui connecte lesdits bras (60, 62 ; 202, 204) et qui est situé sur un côté de ladite deuxième borne (16) qui est à l'opposé de ladite première borne (14) ; ledit pied (64, 230) ayant une dépression allongée (112) s'étendant dans une direction le long de la longueur dudit pied, afin de s'opposer à la flexion de la partie terminale de contact.

6. Système connecteur selon l'une au moins des revendications 1 à 5, dans lequel ledit dispositif à ressort (46, 200) comprend un morceau de tôle métallique, et ladite partie d'extrémité d'ancrage (50, 212) comporte un trou (90, 214) qui reçoit intimement ladite première borne (14) ; ladite partie d'extrémité d'ancrage (50, 212) ayant une pluralité de fentes (126, 128 ; 216, 218) s'étendant depuis ledit trou (90, 214) et formant une pluralité de butées terminales séparées (123, 124 ; 220, 222) espacées autour dudit trou (90, 214), chacune ayant une face intérieure et une face extérieure (134) et chacune ayant une extrémité (123E, 124E) qui engage ladite première borne (14), ladite extrémité de chaque butée formant une partie en coin arrondie (130, 132) au niveau de ladite face intérieure (134), et l'une au moins desdites butées (123, 124 ; 220, 222) ayant un coin vif (136) au niveau de ladite face extérieure, qui pénètre dans ladite première borne (14).

7. Système connecteur selon l'une au moins des revendications 1 à 6, dans lequel ledit dispositif à ressort (46) inclut une partie extérieure et une partie intérieure (206, 208) connectées au niveau d'un repli de sensiblement 180° qui est situé sur un côté de ladite première borne (14) à l'opposé de ladite deuxième borne (16), ladite partie intérieure (208) formant ladite partie d'extrémité d'ancrage (212) et ladite partie extérieure formant ladite partie terminale de mise en contact (44) et étant exempte de restriction à l'exception dudit repli pour réaliser de ce fait une poutre allongée.

8. Système connecteur selon la revendication 7, dans lequel ladite partie intérieure (208) inclut une ouverture formant des parois d'ouverture qui sont disposées sur des côtés opposés dudit isolateur (92)

9. Système connecteur selon l'une au moins des revendications 1 à 3, dans lequel ledit dispositif à ressort comprend une longueur de fil à ressort, une portion dudit fil formant ladite partie terminale de mise en contact (176) s'étendant dans une boucle autour de ladite deuxième borne (16), ladite portion de fil étant repoussée dans la direction de mise en court-circuit (S) mais capable de pivoter dans ladite direction de rupture de court-circuit (U) vers une position sensiblement contre ladite base (28).

10. Système connecteur selon l'une au moins des revendications 1 à 3, dans lequel ledit dispositif à ressort (46) comprend une longueur de fil à ressort qui comporte au moins une spire qui forme ladite partie terminale d'ancrage et qui est enroulée intimement autour de ladite première borne (14) pour ancrer ledit fil sur ladite première borne (14), ledit fil s'étendant suivant une boucle autour de la deuxième borne (16), ladite boucle étant capable de pivoter afin de pivoter dans ladite direction de mise en court-circuit et dans ladite direction de rupture de court-circuit (S, U).

11. Système connecteur selon l'une au moins des revendications 1 à 10, dans lequel ladite base (28) dudit connecteur (12) a une partie de surface extérieure (42) formant une clavette avec des emplacements latéraux opposés sur des côtés opposés de ladite deuxième borne (16), et ledit boîtier (42) dudit dispositif connecteur (18) ayant un évidement formant un passage à clavette (80) qui reçoit de façon intime ladite clavette tandis que ledit connecteur (12) et ledit dispositif connecteur (18) s'accouplent ; ladite partie terminale de contact (44, 176) dudit dispositif à ressort (46, 170, 200) a des bords opposés qui sont disposés suffisamment proches desdits emplacements latéraux opposés de ladite clavette, de sorte que chacun desdits bords du dispositif à ressort va surplomber un emplacement correspondant parmi lesdits emplacements latéraux de la clavette si ledit dispositif à ressort (46, 170, 200) est tourné sur plus de 10° depuis une position désirée dans laquelle les bords (106) du dispositif à ressort sont également espacés depuis lesdits emplacements latéraux opposés de la clavette.

12. Connecteur (12) qui comprend une base isolante (28), et une première et une deuxième borne (14, 16) qui se projettent vers l'extérieur depuis une surface de ladite base (28) et qui sont construites pour s'accoupler avec des dispositifs à borne (20, 22) d'un dispositif connecteur accouplé (18) lequel comprend un boîtier (42) qui s'approche de manière intime de ladite surface de base quand lesdits connecteurs (12, 18) s'accouplent, et dans lequel lesdites bornes (14, 16) doivent être continuellement en court-circuit, excepté lorsque ledit connecteur (12) est accouplé audit dispositif connecteur (18), comprenant :
un dispositif à ressort (46) qui est formé en tôle métallique et qui comporte une extrémité d'ancrage (50) avec un trou (90) qui reçoit de façon intime ladite première borne (14),
ledit dispositif à ressort (46) ayant une partie terminale de mise en contact (44) qui peut se déplacer partiellement dans la direction vers l'extérieur (O) et contre ladite deuxième borne (16), mais qui est pressé par ledit boîtier (42) dudit dispositif connecteur (18) dans une direction vers l'intérieur (I) et hors de contact avec ladite deuxième borne (16) quand ledit dispositif connecteur (18) s'accouple avec ledit connecteur (12) ;
un isolateur (92) en matériau diélectrique disposé autour d'une partie de ladite deuxième borne (16), ladite partie terminale de mise en contact (44) étant sensiblement disposée autour lorsque ladite partie terminale de mise en contact (44) se trouve dans sa position la plus intérieure (64A) quand ledit connecteur (12) et ledit dispositif connecteur (18) sont accouplés, ledit isolateur (92) ayant une extrémité extérieure disposée en arrière de l'emplacement auquel ladite extrémité extérieure de mise en contact se déplace contre ladite deuxième borne (16), et
ladite base (28) a une fente (102), et ledit dispositif à ressort (46) a une languette (100) qui s'étend vers l'intérieur dans ladite fente (102).

13. Connecteur (12) qui comprend une base isolante (28) et une première et une deuxième borne (14, 16) qui sont espacées en sens longitudinal et qui se projettent vers l'extérieur depuis une surface de ladite base (28), et qui sont construites pour s'accoupler avec des dispositifs à bornes (20, 22) d'un dispositif connecteur accouplé (18), lequel comporte un boîtier (42) qui va s'approcher intimement de ladite base (28) quand lesdits connecteurs (12, 18) s'accouplent, dans lequel ladite direction longitudinale et ladite direction vers l'extérieur sont perpendiculaires l'une à l'autre et à une direction latérale, et dans lequel lesdites bornes (14, 16) doivent être continuellement en court-circuit, excepté lorsque ledit connecteur (12) est accouplé audit dispositif connecteur (18), comprenant :
un dispositif à ressort (46) qui est formé en tôle métallique, ledit dispositif à ressort (46) ayant une extrémité d'ancrage (50) avec un trou (90) qui reçoit de façon intime et qui est ancré sur ladite première borne (14), ledit dispositif à ressort (46) ayant également une partie terminale de mise en contact (44) qui comporte une ouverture à travers laquelle s'étend ladite deuxième borne (16) et qui forme une paire de bras opposés (60, 62) qui s'étendent largement dans ladite direction longitudinale et qui sont disposés sur des côtés latéralement opposés de ladite deuxième borne (16), ladite partie terminale de mise en contact (44) ayant un pied (64) qui s'étend latéralement et qui connecte lesdits bras (60, 62) avec chaque bras s'étendant depuis la proximité de ladite extrémité d'ancrage (50) vers ledit pied (64), ladite partie terminale de mise en contact (44) étant sollicitée afin de pivoter dans une direction de mise en court-circuit (S), de telle sorte que ledit pied (64) se déplace vers l'extérieur (O) et contre ladite deuxième borne (A), ladite paire de bras (60, 62) stabilisant l'orientation dudit pied (64), mais ladite partie terminale de mise en contact (44) étant capable de pivoter dans une direction opposée de rupture de court-circuit (U), et
un isolateur (92) en matériau diélectrique qui entoure une partie de ladite deuxième borne (16) disposé à côté dudit pied (64) de ladite partie terminale de mise en contact (44) quand ladite partie terminale de mise en contact (44) est pivotée dans ladite direction de rupture de court-circuit (U) vers une position de rupture de court-circuit (64A), ledit isolateur (92) ayant une extrémité extérieure qui est disposée vers l'intérieur de l'endroit auquel ledit pied se déplace contre ladite borne (16) quand ladite partie terminale de mise en contact (44) pivote dans ladite direction de mise en court-circuit (S).

14. Connecteur selon la revendication 13, dans lequel :
ledit pied (64) a une partie allongée (112) s'étendant parallèlement audit pied (64), et déformée hors du plan de la tôle métallique dudit pied (64), pour éviter un voilage de ladite partie terminale de mise en contact (44)

15. Connecteur selon l'une ou l'autre des revendications 13 et 14, dans lequel ladite base (28) a une fente (102) qui s'y étend vers l'intérieur, et ledit dispositif à ressort (46) a une languette (100) qui est reçue dans ladite fente (102).

16. Connecteur selon l'une au moins des revendications 13 à 15, comprenant un dispositif à ressort (46) qui inclut une partie intérieure et une partie extérieure (206, 208) connectées par un repli, ladite partie intérieure (208) étant ancrée sur ladite première borne (14), et ledit repli étant disposé sur un côté de ladite première borne (14) qui est à l'opposé de ladite deuxième borne (16), ladite partie extérieure (206) étant exempte de restriction, excepté au niveau dudit repli, et étant sollicitée de manière à se déplacer largement vers l'extérieur, mais étant positionné de manière à être défléchi vers l'intérieur par ledit deuxième dispositif connecteur (18) pendant l'accouplement, ladite partie extérieure (206) ayant un emplacement de contact (54) disposé sur un côté de ladite deuxième borne (16) à l'opposé de ladite première borne (14), ledit emplacement de contact (54) se déplaçant vers l'extérieur (O) et en direction (I) de ladite deuxième borne (16), et finalement contre ladite deuxième borne (16), tandis que ladite partie extérieure (206) se déplace vers l'extérieur (O).

17. Connecteur (12), comprenant :
une base isolante (28) ;
une pluralité de bornes (14, 16) montées dans ladite base (28) et ayant des parties d'extrémité libres (30, 32) s'étendant dans une direction vers l'extérieur depuis ladite base (28) ;
un dispositif à ressort (46) qui est formé en tôle métallique et qui comprend une partie d'extrémité d'ancrage (130) ayant un trou (90) ancré sur une première desdites bornes, et une partie d'extrémité de mise en contact (44) capable d'engager une deuxième desdites bornes ;
ledit ressort est capable de pivoter dans des directions opposées de mise en court-circuit et de rupture de court-circuit (S, U) ;
un isolateur (92, 196) en matériau isolant, qui entoure au moins partiellement une partie intérieure (94) de ladite partie d'extrémité libre (32) de la deuxième borne pour empêcher à ladite partie terminale de mise en contact (44) dudit dispositif à ressort (46) de venir toucher ladite deuxième borne (16) quand ledit connecteur (12) et ledit dispositif connecteur (18) sont totalement accouplés et que ladite partie terminale de mise en contact (44, 176, 230) a été totalement pivotée dans ladite direction de rupture de court-circuit (U),
ladite partie terminale d'extrémité d'ancrage (50) ayant une pluralité de fentes (126, 128) s'étendant depuis ledit trou (90) et formant une pluralité de butées terminales séparées, espacées autour dudit trou (90) et ayant chacune des faces intérieure et extérieure (134) qui engagent ladite première borne (14), ladite extrémité de chaque butée (123, 124) formant une partie en coin arrondie (130, 132) au niveau de ladite face intérieure (134).

18. Connecteur selon la revendication 17, dans lequel l'une au moins desdites butées (123, 124) comporte une extrémité d'engagement de borne qui forme un coin acéré (136) au niveau de ladite face extérieure et qui pénètre dans ladite première borne.

19. Connecteur selon l'une au moins des revendications 17 et 18, dans lequel ladite base (28) a une fente (102) et ledit dispositif à ressort (46) comporte une languette (100) qui se projette vers l'intérieur dans ladite fente (102) et qui limite le pivotement dudit dispositif à ressort (46) autour de ladite première borne.

20. Procédé pour construire un connecteur (12) qui comporte une base isolante (28) et une paire de bornes (14, 16) montées dans la base (28) et ayant des parties d'extrémité libres (30, 32) qui s'étendent vers l'extérieur depuis la base (28) et qui inclut un dispositif à ressort (46) connecté à ladite première borne (14) et ayant une partie terminale de mise en contact (44), qui est capable de se déplacer vers l'extérieur (O) ainsi que dans une direction latérale qui perpendiculaire à ladite direction vers l'extérieur (O) vers ladite deuxième borne (16) vers une position de mise en court-circuit (S) pour engager un emplacement sur ladite deuxième borne (16), et dans lequel ladite extrémité de contact peut se déplacer vers l'intérieur (I) ainsi que latéralement en éloignement (B) depuis ladite borne (16) vers une position de rupture de court-circuit (64A), ledit procédé assurant une sécurité afin que ladite partie terminale de mise en contact (44) ne vienne pas toucher ladite deuxième borne (16) lorsqu'elle s'est déplacée à ladite position de rupture de court-circuit (64A), **caractérisé par** le fait de former ladite base (28) avec un isolateur (92, 80, 196) qui entoure au moins partiellement une partie intérieure (94) de ladite partie terminale libre (32) mais qui présente une épaisseur (T) qui ne dépasse pas la largeur (W) de ladite deuxième borne (16) pour former une barrière qui empêche à ladite partie terminale de mise en contact (44) dans ladite position de rupture de court-circuit (64A) de se déplacer vers le côté mais non pas vers l'extérieur (O) et de venir toucher ladite deuxième borne (16), tout en évitant une interférence avec le mouvement de ladite extrémité de contact (44) vers ladite position de rupture de court-circuit (64A).

21. Procédé selon la revendication 20, incluant les opérations suivantes:
on forme ladite base (28) avec une fente s'étendant vers l'intérieur (102);
on forme ledit dispositif à ressort (46) en tôle métallique avec des parois formant un trou (90) et avec une languette (100) qui s'étend sensiblement à angle droit depuis une partie adjacente de ladite tôle métallique ;
on déplace ledit dispositif à ressort (46) de sorte que les parois dudit trou (90) reçoivent ladite première borne (14) pour connecter à ladite première borne (14) et pour empêcher une translation latérale dudit dispositif à ressort (46), et
on déplace ladite languette (100) vers l'intérieur de ladite fente (102), pour limiter le pivotement dudit dispositif à ressort (46) autour de ladite première borne (14).
